# EUROPEAN PATENT SPECIFICATION

(11) **EP 4 681 890 B1**
(45) Date of publication and mention of the grant of the patent: **02.12.2026**
(21) Application number: 25221090.1
(22) Date of filing: 22.10.2020
(51) Int. Cl.: B25J 9/16

(54) **ROBOT CONTROL METHOD**
ROBOTERSTEUERUNGSVERFAHREN
PROCÉDÉ DE COMMANDE DE ROBOT

(30) Priority: 05.11.2019 JP 2019200787
(43) Date of publication of application: 21.01.2026
(62) Document number(s) of the earlier application(s) in accordance with Art. 76 EPC: 20885590.8 / 4 056 330
(73) Proprietor: Panasonic Intellectual Property Management Co., Ltd., Kadoma-shi, Osaka 571-0057 (JP)
(72) Inventor: IWATANI, Masayoshi, Osaka, 571-0057 (JP); NAKATA, Hiroyuki, Osaka, 571-0057 (JP); UEDA, Hiroyoshi, Osaka, 571-0057 (JP); HASHIMOTO, Atsumi, Osaka, 571-0057 (JP); HONUCHI, Yasuyoshi, Osaka, 571-0057 (JP); YAMAMOTO, Ryosuke, Osaka, 571-0057 (JP)
(74) Representative: Novagraaf International SA

(56) References cited:
- WO-A1-2005/002804
- US-A1- 2018 272 535
- US-A1- 2019 224 846

## Description

### TECHNICAL FIELD

The present disclosure relates to a robot control method.

### BACKGROUND ART

Conventionally, a robot control method that drives each joint of a robot based on teaching data has been known (see, for example, Patent Literatures 1 and 2). Here, because the robot is driven via a speed reducer provided in the joint, there is a problem that the speed reducer and a bearing are elastically deformed to cause deflection in an arm and an absolute positional accuracy becomes difficult to be ensured.

Patent Literature 1 discloses a configuration in which load information is added to each piece of teaching point data, and deflection compensation is performed while a compensation amount for each teaching point is switched according to the load information.

Patent Literature 2 discloses a configuration in which teaching points are created according to the presence of a gripped object, and a robot is operated based on teaching point data to which information on the presence of the gripped object is added.

### Citation List

### Patent Literature

PTL 1: Unexamined Japanese Patent Publication No. H07-88789
PTL 2: Unexamined Japanese Patent Publication No. 2000-176869

The document WO 2005/002804 A1 discloses a robot control method reflecting the preamble of present claim 1. The document US 2019/224846 A1 discloses a position control method of an end effector on a flexible arm such as a boom, wherein a robot arm controller is switched between a first state in which a compensation amount for compensating the displacement of the base position (e.g. the position of a truck on which the boom is mounted) obtained based on positioning feedback data derived from a tracker system is applied when the end effector is to be controlled relative to the ground (e.g. when a brick is to be picked from the environment or laid on a wall relative to the ground) and a second state in which no compensation amount is applied when the end effector is to be controlled relative to the machine structure (e.g. when a brick is to be picked from or placed onto the machine). The switching between the two states is performed by gradually changing the compensation amount to prevent large forces and disturbance to the boom during the transition. This document does not relate to deflection compensation of the robot arm and the switching between the two states occurs in the gripping state of the workpiece.

### SUMMARY OF THE INVENTION

### Technical problem

Meanwhile, in the conventional invention, malfunction possibly occurs if the actual gripping state of a workpiece and the switching timing of the compensation amount of the arm are not appropriate.

Specifically, when a delay occurs in the opening operation of the hand at the time of opening the hand after the workpiece is placed on a workbench, the compensation amount of the arm is switched in the state of the hand still gripping the workpiece. As a result, there is a risk that the workpiece is damaged by being pressed against the workbench.

Therefore, it is conceivable to wait for a predetermined time after an opening command of the hand is output and switch the compensation amount of the arm after the opening operation of the hand is securely performed.

However, if the workpiece is a heavy object and the compensation amount of the arm is large, the acceleration of the arm generated based on the change in the compensation amount also becomes large. In this case, the arm possibly moves by a width equal to or larger than the compensation amount, and there is a risk of the hand coming into contact with the workbench.

The present disclosure has been made in view of the above point, and an object of the present disclosure is to suppress a malfunction that occurs when deflection of an arm is compensated after a workpiece is brought into a non-gripping state.

### Solution to problem

The present disclosure is directed to a robot control method of operating an arm of a robot having a plurality of joints based on a predetermined operation program, and has taken the following solution.

The present invention is defined by the appended claims.

According to the invention, when the workpiece is brought into the non-gripping state after the deflection compensation of the arm is performed in the gripping state of the workpiece, the deflection compensation of the arm is performed in the non-gripping state of the workpiece. Here, the deflection compensation of the arm in the non-gripping state of the workpiece is performed while a compensation amount is changed to gradually decrease, while the gripping part is moved from the first teaching point to the second teaching point.

As a result, a malfunction that occurs when the deflection of the arm is compensated after the workpiece is brought into the non-gripping state can be suppressed.

Specifically, when the joint is rapidly moved based on the compensation amount in order to perform deflection compensation for the arm in the non-gripping state of the workpiece after the gripping part is opened and the workpiece is brought into the non-gripping state, there is a risk that the acceleration of the arm increases and the arm collides with the workbench or the like.

On the other hand, in the present disclosure, the compensation amount is gradually decreased according to the elapsed time or the movement amount of the arm while the gripping part is moved from the first teaching point to the second teaching point. As a result, when the workpiece is brought from the gripping state to the non-gripping state, the compensation amount of the arm can be gently varied, and unintended movement of the arm can be suppressed.

According to the invention,
the compensation amount includes a first compensation amount in a gripping state of the workpiece, a second compensation amount in the non-gripping state of the workpiece, and a third compensation amount continuously changing between the first compensation amount and the second compensation amount, and
the third compensation amount changes linearly from the first compensation amount toward the second compensation amount.

The deflection compensation of the arm is performed based on the third compensation amount that linearly changes so as to gradually decrease from the first compensation amount toward the second compensation amount.

As a result, when the workpiece is brought from the gripping state to the non-gripping state, the compensation amount of the arm can be gently varied, and unintended movement of the arm can be suppressed.

According to a specific embodiment of the invention,
the third compensation amount changes in a curved shape at a boundary position between the first compensation amount and the third compensation amount and at a boundary position between the third compensation amount and the second compensation amount.

According to this specific embodiment, the boundary position between the first compensation amount and the third compensation amount and the boundary position between the third compensation amount and the second compensation amount change in a curved shape.

As a result, when the workpiece is brought from the gripping state to the non-gripping state, the compensation amount of the arm can be more gently varied, and unintended movement of the arm can be suppressed.

According to the invention,
the joint is operated based on a fourth compensation amount that changes more gently than the third compensation amount, in a case where a time from when the workpiece is brought into the non-gripping state to when the gripping part starts to move from the first teaching point to the second teaching point is shorter than a predetermined time.

In the case where the time until the gripping part starts to move after the workpiece is brought into the non-gripping state is short, the deflection compensation of the arm is performed based on the fourth compensation amount that changes more gently than the third compensation amount.

As a result, when the workpiece is brought from the gripping state to the non-gripping state, the compensation amount of the arm can be more gently varied, and unintended movement of the arm can be suppressed.

According to a specific embodiment of the present invention, the arm has an acceleration within a range of allowable acceleration of the arm, the acceleration being generated based on a change in the compensation amount.

According to this specific embodiment, the acceleration of the arm generated based on the change in the compensation amount is set within the range of the allowable acceleration of the arm. As a result, the arm can be suppressed from moving by a width exceeding the compensation amount.

### Advantageous effect of invention

According to the present disclosure, it is possible to suppress a problem that occurs when the deflection of the arm is compensated after the workpiece is brought into the non-gripping state.

### BRIEF DESCRIPTION OF THE DRAWINGS

Fig. 1 is a side view illustrating a configuration of a robot according to an exemplary embodiment.
Fig. 2 is a graph showing a relationship between a load weight, a deflection amount, and a compensation amount.
Fig. 3 is a timing chart illustrating a relationship between a hand opening/closing operation, a compensation amount, and a deviation from a target position in the case where the hand opening/closing operation is normally performed.
Fig. 4 is a timing chart illustrating a relationship between the hand opening/closing operation, the compensation amount, and the deviation from the target position in the case where a delay has occurred in the hand opening/closing operation.
Fig. 5 is a perspective view for explaining a positional relationship between a hand, a workpiece, and a workbench when a delay has occurred in the hand opening/closing operation.
Fig. 6 is a timing chart illustrating a relationship between the hand opening/closing operation, the compensation amount, and the deviation from the target position in the case where a delay command is executed after a hand opening command is executed.
Fig. 7 is a perspective view for explaining a positional relationship between the hand, the workpiece, and the workbench in the case where the delay command is executed after the hand opening command is executed.
Fig. 8 is a timing chart illustrating a relationship between the hand opening/closing operation, the compensation amount, and the deviation from the target position in the case where a control method according to a main embodiment is applied.
Fig. 9 is a timing chart illustrating a relationship between the compensation amount, a compensation amount change rate, and a compensation amount change acceleration in the case where a control method according to a first modification is applied.
Fig. 10 is a timing chart illustrating a relationship between the hand opening/closing operation, the compensation amount, and the deviation from the target position in the case where a control method according to the main embodiment is applied.

### DESCRIPTION OF EMBODIMENT

An exemplary embodiment of the present disclosure is described below with reference to the drawings. Note that the following description of the preferred exemplary embodiment is merely exemplary in nature, and is not intended to limit the present disclosure, its application, or its use.

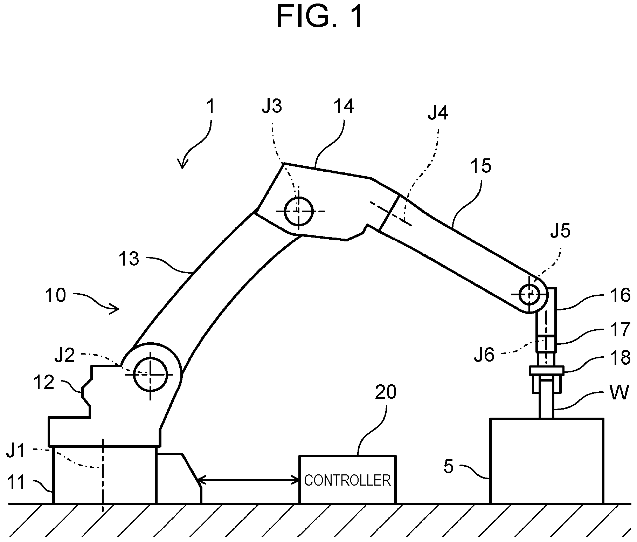

As illustrated in Fig. 1, robot 1 includes six-axis articulated robot arm 10 and controller 20 that controls the operation of robot arm 10. Robot 1 transfers workpiece W to and from workbench 5.

Robot arm 10 includes base 11, shoulder 12, lower arm 13, first upper arm 14, second upper arm 15, wrist 16, and attaching part 17.

Shoulder 12 is supported on base 11 so as to be turnable in the horizontal direction about first joint J1. Lower arm 13 is supported on shoulder 12 so as to be turnable in the vertical direction about second joint J2.

First upper arm 14 is supported on lower arm 13 so as to be turnable in the vertical direction about third joint J3. Second upper arm 15 is supported on the tip of first upper arm 14 so as to be torsionally rotatable about fourth joint J4.

Wrist 16 is supported on second upper arm 15 so as to be turnable in the vertical direction about fifth joint J5. Attaching part 17 is supported on wrist 16 so as to be torsionally rotatable about sixth joint J6. Hand 18 (gripping part) that grips workpiece W is attached to attaching part 17.

An unillustrated actuator is built in each of first joint J1 to sixth joint J6. Controller 20 controls driving of the actuators of first joint J1 to sixth joint J6 based on an operation program input in advance by teaching or the like so that first joint J1 to sixth joint J6 reach target positions (command angles), respectively.

Robot arm 10 moves workpiece W gripped by hand 18 to a first teaching point of workbench 5, opens hand 18 at the first teaching point, and brings workpiece W into the non-gripping state. Thereafter, robot arm 10 moves hand 18 toward a second teaching point positioned away from the first teaching point in the non-gripping state of workpiece W.

Incidentally, in articulated robot 1 as described above, robot arm 10 is deflected and deformed in the direction of gravity by the weight of robot arm 10, the weight of hand 18 at the tip of robot arm 10, and the load weight of workpiece W.

Specifically, unillustrated speed reducers and bearings are provided in first joint J1 to sixth joint J6, and robot arm 10 is deflected by elastic deformation of the speed reducers and the bearings, and the tip of hand 18 is deviated from the target position.

Therefore, in robot arm 10 according to the present exemplary embodiment, this deflection is eliminated in consideration of the static elastic deflection generated in second joint J2 and third joint J3 turnable in the gravity direction.

More specifically, the gravitational torque acts on second joint J2 and third joint J3 in the clockwise direction in Fig. 1, and the deflection occurs in the turning direction of the rotation shaft. Therefore, second joint J2 and third joint J3 are turned in the counterclockwise direction in Fig. 1 to cancel the deflection generated at second joint J2 and third joint J3, thereby compensating for the positional deviation generated at the tip of hand 18.

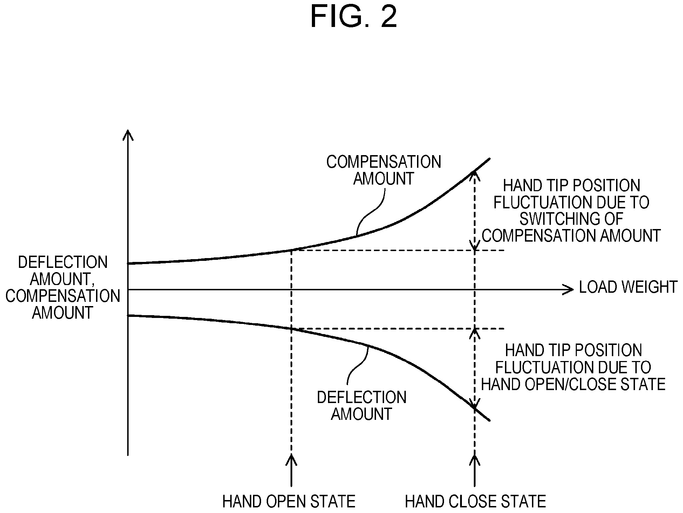

As illustrated in Fig. 2, a deflection amount of robot arm 10 increases in the downward direction as the load weight of workpiece W increases. A compensation amount of robot arm 10 increases in the upward direction in order to cancel the deflection amount as the load weight of workpiece W increases.

A fluctuation range of hand 18 is larger in the state of hand 18 being closed (in the gripping state of workpiece W) than in the state of hand 18 being opened (in the non-gripping state of the workpiece W), and a variation range of the compensation amount is also larger.

When workpiece W is transferred to the workbench 5 after workpiece W is gripped by hand 18 and the deflection compensation of robot arm 10 is performed, the tip of hand 18 is deviated by the amount of the weight of workpiece W which is no longer applied to hand 18.

Therefore, when workpiece W is in the non-gripping state, second joint J2 and third joint J3 need to be turned in order to eliminate the positional deviation of the tip of hand 18.

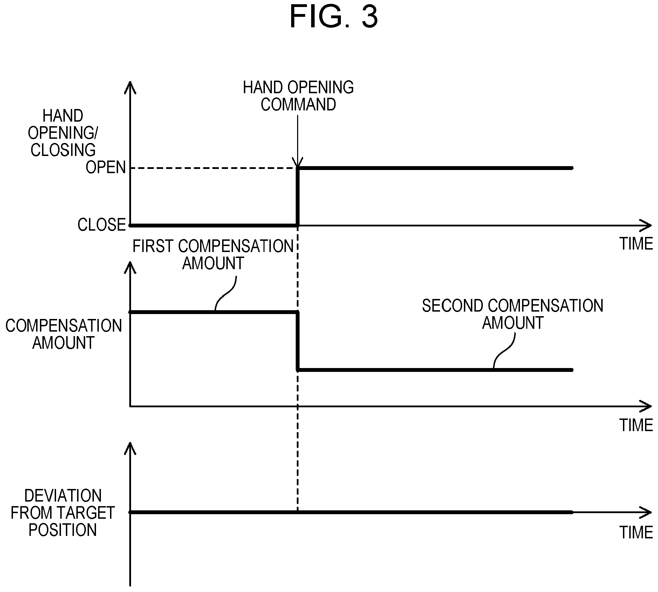

As shown in Fig. 3, in a state of hand 18 being closed, the deflection compensation of robot arm 10 is performed based on a first compensation amount. When an opening command of hand 18 is output and hand 18 is opened, the compensation amount is switched to a second compensation amount smaller than the first compensation amount, and the deflection compensation of robot arm 10 is performed based on the second compensation amount.

The deflection compensation of robot arm 10 based on the second compensation amount is performed by turning second joint J2 and third joint J3 in the clockwise direction in Fig. 1. That is, hand 18 is made to be lowered by the amount that hand 18 has been lifted in order to compensate for the deflection of robot arm 10 due to the weight of workpiece W.

Meanwhile, a malfunction possibly occurs if the actual gripping state of workpiece W and the switching timing of the compensation amount of robot arm 10 are not appropriate.

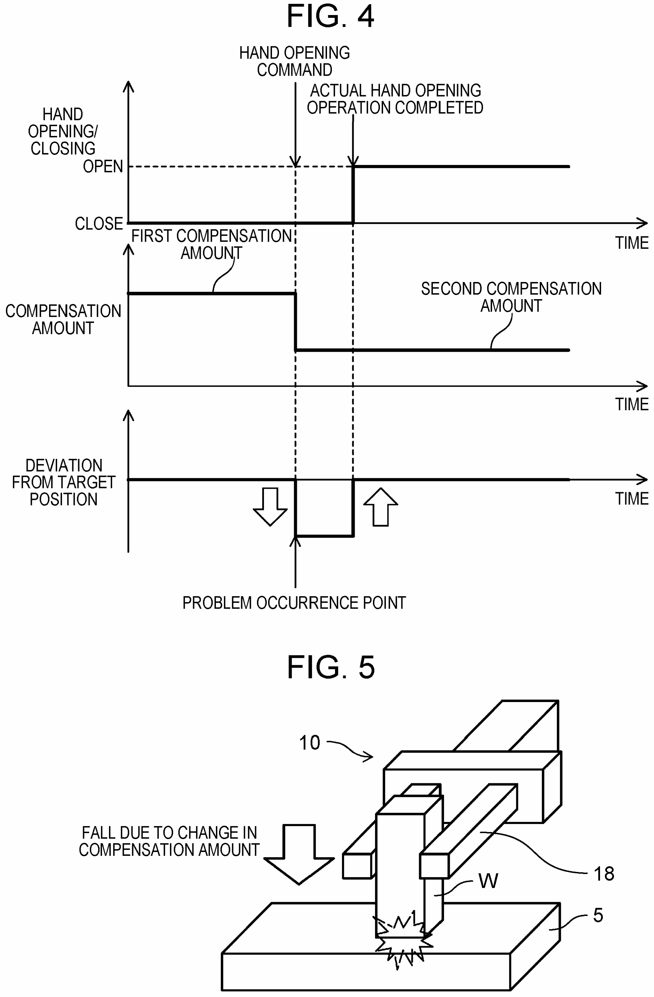

Specifically, as illustrated in Fig. 4, when a delay occurs in the opening operation of hand 18 at the time of opening hand 18 after workpiece W is placed on workbench 5, the compensation amount of robot arm 10 is switched in the state of hand 18 still gripping workpiece W. As a result, there is a risk that workpiece W is damaged by being pressed against workbench 5 (see Fig. 5).

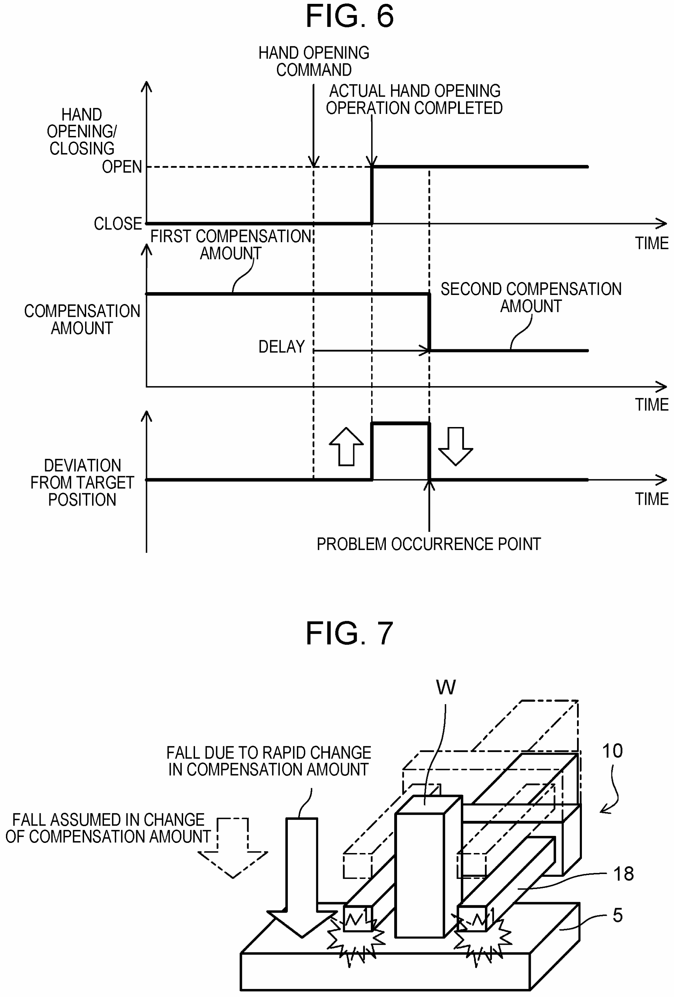

Therefore, as illustrated in Fig. 6, it is conceivable to execute a delay command and wait for a predetermined time after the opening command of hand 18 is output, and to switch the compensation amount of robot arm 10 after the opening operation of hand 18 is securely performed.

However, if workpiece W is a heavy object and the compensation amount of robot arm 10 is large, the acceleration of robot arm 10 generated based on the change in the compensation amount also becomes large. In this case, robot arm 10 possibly moves by a width equal to or larger than the compensation amount, and there is a risk of hand 18 coming into contact with workbench 5 (see Fig. 7).

Therefore, in the present invention, when workpiece W is brought from the gripping state to the non-gripping state, the compensation amount of robot arm 10 is gently varied, and unintended movement of robot arm 10 can be suppressed.

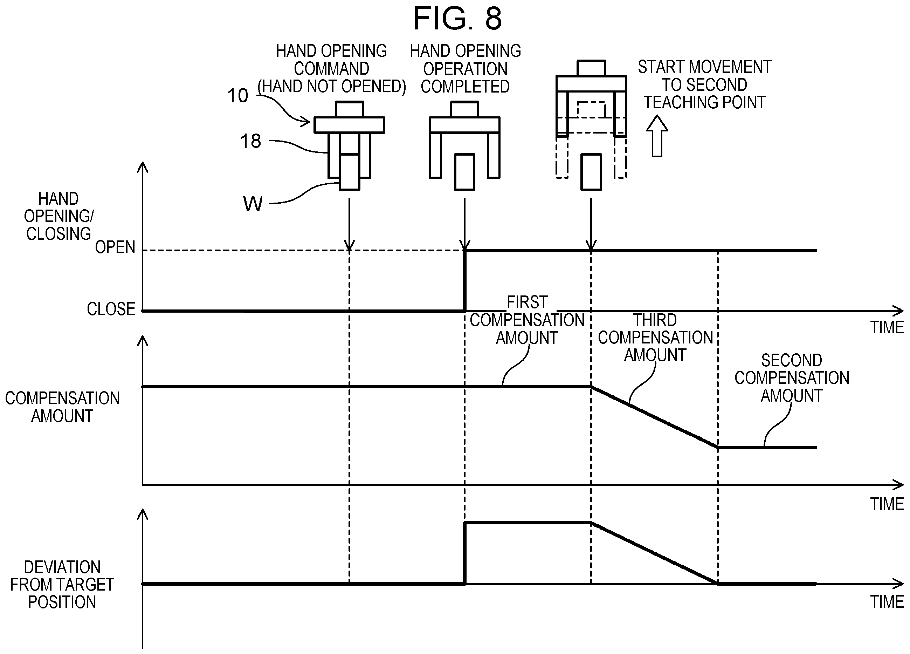

Specifically, as illustrated in Fig. 8, workpiece W held by hand 18 is moved to the first teaching point of workbench 5. In the state of hand 18 being closed, the deflection compensation of robot arm 10 is performed based on the first compensation amount.

The delay command is executed after the opening command of hand 18 is output at the first teaching point to cause the operation to wait for a predetermined time so that the opening operation of hand 18 is securely performed.

Thereafter, in the non-gripping state of workpiece W, second joint J2 and third joint J3 are operated while the compensation amount is changed to gradually decrease, while hand 18 is moved from the first teaching point to the second teaching point.

Specifically, the compensation amount includes the first compensation amount in the gripping state of workpiece W, the second compensation amount in the non-gripping state of workpiece W, and a third compensation amount continuously changing between the first compensation amount and the second compensation amount. The third compensation amount linearly changes from the first compensation amount to the second compensation amount.

After hand 18 starts to move from the first teaching point toward the second teaching point in the non-gripping state of workpiece W, the deflection compensation of robot arm 10 is performed based on the third compensation amount until hand 18 arrives at the second teaching point.

As a result, when workpiece W is brought from the gripping state to the non-gripping state, the compensation amount of robot arm 10 can be gently varied, and unintended movement of robot arm 10 can be suppressed.

### <<First modification>>

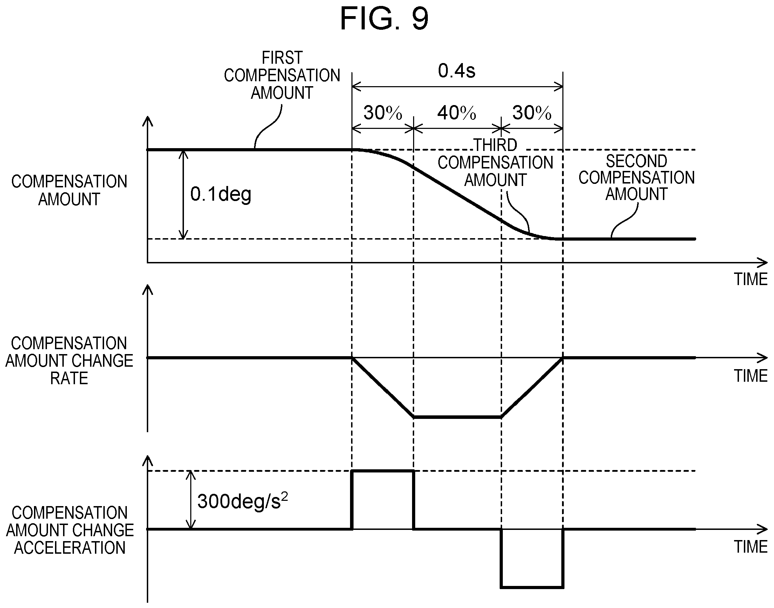

As illustrated in Fig. 9, in a first modification, the compensation amount while hand 18 is moved from the first teaching point to the second teaching point is changed by a change amount different from that in the main embodiment.

Specifically, the compensation amount includes the first compensation amount in the gripping state of workpiece W, the second compensation amount in the non-gripping state of workpiece W, and a third compensation amount continuously changing between the first compensation amount and the second compensation amount.

The third compensation amount linearly changes from the first compensation amount to the second compensation amount. Also, in the third compensation amount, a boundary position between the first compensation amount and the third compensation amount and a boundary position between the third compensation amount and the second compensation amount change in a curved shape.

After hand 18 starts to move from the first teaching point toward the second teaching point in the non-gripping state of workpiece W, the deflection compensation of robot arm 10 is performed based on the third compensation amount until hand 18 arrives at the second teaching point.

As a result, when workpiece W is brought from the gripping state to the non-gripping state, the compensation amount of robot arm 10 can be more gently varied, and unintended movement of robot arm 10 can be suppressed.

Here, the acceleration of robot arm 10 generated based on the change in the third compensation amount is set within a range of allowable acceleration of robot arm 10. Specifically, in the case of the compensation amount being 0.1° and the maximum allowable acceleration is 300°/s², the changing time of the compensation amount is set to 0.4 seconds.

Assuming that the entire changing time (0.4 seconds) of the compensation amount is 100%, the compensation amount is changed such that a curved section at the boundary position between the first compensation amount and the third compensation amount is 30%, a straight line section of the third compensation amount is 40%, and a curved section at the boundary position between the third compensation amount and the second compensation amount is 30%.

As a result, the compensation amount of the robot arm 10 can be more gently varied, and the robot arm 10 can be suppressed from operating with a width exceeding the compensation amount.

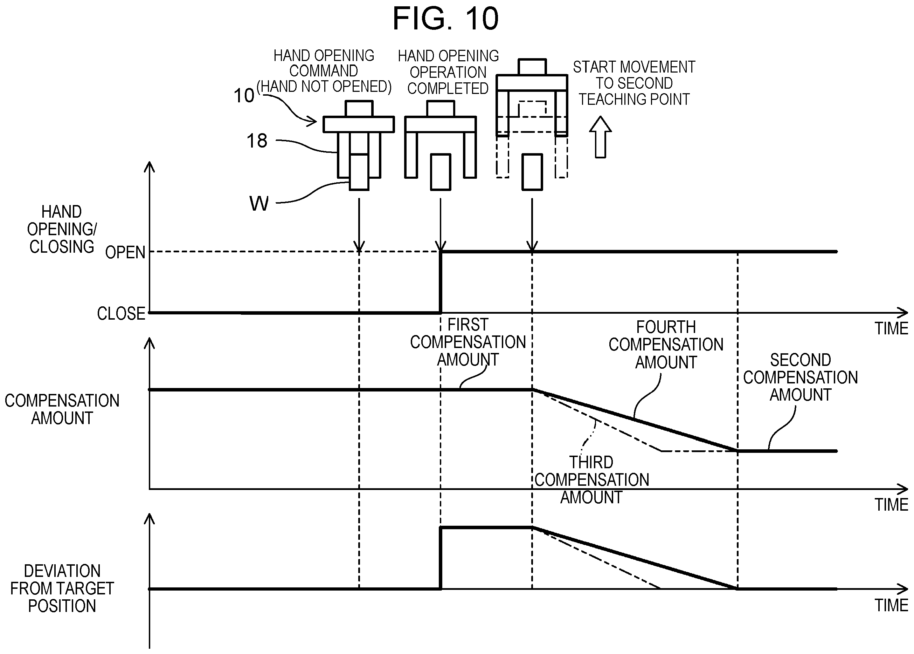

As illustrated in Fig. 10, according to the main embodiment, in a case where the time from when workpiece W is brought into the non-gripping state to when hand 18 starts to move from the first teaching point to the second teaching point is shorter than a predetermined time, second joint J2 and third joint J3 are operated based on a fourth compensation amount that changes more gently than the third compensation amount.

As a result, when workpiece W is brought from the gripping state to the non-gripping state, the compensation amount of robot arm 10 can be more gently varied, and unintended movement of robot arm 10 can be suppressed.

According to an embodiment which is not part of the present invention, in the case where the distance between hand 18 and the first teaching point is shorter than a predetermined distance, there is a risk that hand 18 collides with workbench 5 when hand 18 is rapidly moved. Therefore, similarly in the case of the distance between hand 18 and the first teaching point being short, second joint J2 and third joint J3 are preferably operated based on the fourth compensation amount that changes more gently than the third compensation amount (see Fig. 10).

### INDUSTRIAL APPLICABILITY

As described above, the present disclosure is extremely useful and has high industrial applicability by the fact of being able to exhibit a highly practical effect of suppressing the malfunction that occurs when the deflection of the arm is compensated after the workpiece is brought into the non-gripping state.

### REFERENCE MARKS IN THE DRAWINGS

- 1: robot
- 10: robot arm
- 18: hand (gripping part)
- J1: first joint
- J2: second joint
- J3: third joint
- J4: fourth joint
- J5: fifth joint
- J6: sixth joint
- W: workpiece

## Claims

1. A robot control method configured to operate an arm (10) of a robot (1) having a plurality of joints (J1-J6) based on a predetermined operation program, the robot control method comprising:
compensating deflection generated in the arm (10) by operating at least one of the plurality of joints (J1 - J6) based on a first compensation amount defined for a gripping state of a workpiece (W), the deflection being generated by the arm (10) gripping the workpiece (W) with a gripping part (18) of the arm (10);
moving the workpiece (W) in said gripping state by the arm (10) to a first teaching point;
opening the gripping part (18) at the first teaching point to bring the workpiece (W) into a non-gripping state, wherein a second compensation amount is defined for the non-gripping state;
**characterized in that** the method further comprises:
operating the at least one joint (J1 - J6) based on a third compensation amount continuously changing linearly to gradually decrease from the first compensation amount toward the second compensation amount, while the gripping part (18) is moved from the first teaching point to a second teaching point in the non-gripping state of the workpiece (W); and
wherein the at least one joint (J1 - J6) is operated based on a fourth compensation amount that changes more gently than the third compensation amount while the gripping part (18) is moved from the first teaching point to the second teaching point in the non-gripping state of the workpiece (W), in a case where a time from when the workpiece is brought into the non-gripping state to when the gripping part (18) starts to move from the first teaching point to the second teaching point is shorter than a predetermined time.

2. The robot control method according to Claim 1, wherein
the third compensation amount changes in a curved shape at a boundary position between the first compensation amount and the third compensation amount and at a boundary position between the third compensation amount and the second compensation amount.

3. The robot control method according to any one of Claims 1 to 2, wherein
the arm (10) has an acceleration within a range of allowable acceleration of the arm (10), the acceleration being generated based on a change in the compensation amount.

## Patentansprüche

1. Roboter-Steuerungsverfahren, das dazu konfiguriert ist, einen Arm (10) eines Roboters (1) mit einer Mehrzahl von Gelenken (J1-J6) auf der Grundlage eines vorbestimmten Betriebsprogramms zu betreiben, wobei das Roboter-Steuerungsverfahren umfasst:
Kompensieren einer im Arm (10) erzeugten Durchbiegung durch Betreiben mindestens eines der Mehrzahl von Gelenken (J1 - J6) auf der Grundlage eines ersten Kompensationsbetrags, der für einen Greifzustand eines Werkstücks (W) definiert ist, wobei die Durchbiegung dadurch erzeugt wird, dass der Arm (10) das Werkstück (W) mit einem Greifteil (18) des Arms (10) greift;
Bewegen des Werkstücks (W) in dem Greifzustand durch den Arm (10) zu einem ersten Lehrpunkt;
Öffnen des Greifteils (18) am ersten Lehrpunkt, um das Werkstück (W) in einen Nicht-Greifzustand zu bringen, wobei ein zweiter Kompensationsbetrag für den Nicht-Greifzustand definiert ist;
**dadurch gekennzeichnet, dass** das Verfahren ferner umfasst:
Betreiben des mindestens einen Gelenks (J1 - J6) auf der Grundlage eines dritten Kompensationsbetrags, der sich kontinuierlich linear ändert, um von dem ersten Kompensationsbetrag zu dem zweiten Kompensationsbetrag hin allmählich abzunehmen, während das Greifteil (18) im Nicht-Greifzustand des Werkstücks (W) von dem ersten Lehrpunkt zu einem zweiten Lehrpunkt bewegt wird; und
wobei das mindestens eine Gelenk (J1 - J6) auf der Grundlage eines vierten Kompensationsbetrags betrieben wird, der sich sanfter ändert als der dritte Kompensationsbetrag, während das Greifteil (18) im Nicht-Greifzustand des Werkstücks (W) von dem ersten Lehrpunkt zu dem zweiten Lehrpunkt bewegt wird, in einem Fall, in dem eine Zeit von dem Zeitpunkt, zu dem das Werkstück in den Nicht-Greifzustand gebracht wird, bis zu dem Zeitpunkt, zu dem das Greifteil (18) beginnt, sich von dem ersten Lehrpunkt zu dem zweiten Lehrpunkt zu bewegen, kürzer als eine vorbestimmte Zeit ist.

2. Roboter-Steuerungsverfahren nach Anspruch 1, wobei
sich der dritte Kompensationsbetrag an einer Grenzposition zwischen dem ersten Kompensationsbetrag und dem dritten Kompensationsbetrag und an einer Grenzposition zwischen dem dritten Kompensationsbetrag und dem zweiten Kompensationsbetrag in einer gekrümmten Form ändert.

3. Roboter-Steuerungsverfahren nach einem der Ansprüche 1 bis 2, wobei der Arm (10) eine Beschleunigung innerhalb eines Bereichs zulässiger Beschleunigung des Arms (10) aufweist, wobei die Beschleunigung auf der Grundlage einer Änderung des Kompensationsbetrags erzeugt wird.

## Revendications

1. Procédé de commande de robot configuré pour actionner un bras (10) d'un robot (1) ayant une pluralité d'articulations (J1-J6) sur la base d'un programme de fonctionnement prédéterminé, le procédé de commande de robot comprenant :
la compensation d'une flexion générée dans le bras (10) en actionnant au moins l'une de la pluralité d'articulations (J1 - J6) sur la base d'une première quantité de compensation définie pour un état de préhension d'une pièce (W), la flexion étant générée par le bras (10) saisissant la pièce (W) avec une partie de préhension (18) du bras (10) ;
le déplacement de la pièce (W) dans ledit état de préhension par le bras (10) vers un premier point d'apprentissage ;
l'ouverture de la partie de préhension (18) au premier point d'apprentissage pour amener la pièce (W) dans un état de non-préhension, dans lequel une deuxième quantité de compensation est définie pour l'état de non-préhension ;
**caractérisé en ce que** le procédé comprend en outre :
l'actionnement de l'au moins une articulation (J1 - J6) sur la base d'une troisième quantité de compensation changeant continûment de manière linéaire de façon à diminuer graduellement depuis la première quantité de compensation vers la deuxième quantité de compensation, tandis que la partie de préhension (18) est déplacée du premier point d'apprentissage vers un deuxième point d'apprentissage dans l'état de non-préhension de la pièce (W) ;
et
dans lequel l'au moins une articulation (J1 - J6) est actionnée sur la base d'une quatrième quantité de compensation qui change plus doucement que la troisième quantité de compensation tandis que la partie de préhension (18) est déplacée du premier point d'apprentissage vers le deuxième point d'apprentissage dans l'état de non-préhension de la pièce (W), dans un cas où un temps depuis le moment où la pièce est amenée dans l'état de non-préhension jusqu'au moment où la partie de préhension (18) commence à se déplacer du premier point d'apprentissage vers le deuxième point d'apprentissage est plus court qu'un temps prédéterminé.

2. Procédé de commande de robot selon la revendication 1, dans lequel la troisième quantité de compensation change selon une forme courbe à une position limite entre la première quantité de compensation et la troisième quantité de compensation et à une position limite entre la troisième quantité de compensation et la deuxième quantité de compensation.

3. Procédé de commande de robot selon l'une quelconque des revendications 1 à 2, dans lequel
le bras (10) présente une accélération dans une plage d'accélération admissible du bras (10), l'accélération étant générée sur la base d'un changement de la quantité de compensation.
